# EUROPEAN PATENT SPECIFICATION

(11) **EP 3 687 925 B1**
(45) Date of publication and mention of the grant of the patent: **01.03.2023**
(21) Application number: 18788999.3
(22) Date of filing: 21.09.2018
(51) Int. Cl.: B65D 85/804

(54) **CAPSULE FOR A SOLUBLE AND NON-SOLUBLE PRODUCT, SUCH AS COFFEE AND ITS DERIVATIVES, TEA AND HERBAL TEAS AND BEVERAGES**
KAPSEL ZUR ZUBEREITUNG VON EINEM PRODUKT WIE KAFFEE, TEE UND GETRÄNKEN
CAPSULE POUR LA PREPARATION D'UN PRODUIT COMME LE CAFE, DU TEE ET DES BOISSONS

(30) Priority: 27.09.2017 IT 201700107829; 18.01.2018 IT 201800001267
(43) Date of publication of application: 05.08.2020
(73) Proprietor: PKA Solutions S.R.L., 40123 Bologna (IT)
(72) Inventor: PARISE, Carlo Alberto, 35037 Teolo (IT)
(74) Representative: Modiano, Micaela Nadia
(86) International application number: PCT/EP2018/075571
(87) International publication number: WO 2019/063427

(56) References cited:
- WO-A1-2005/044067
- WO-A1-2011/000725
- WO-A1-2013/072239
- WO-A1-2014/001564
- DE-A1-102014 116 081

## Description

The present invention relates to a capsule for a soluble product, such as for example coffee and its derivatives, tea or herbal teas, beverages, broth or the like.

The invention is applied at home in the field of machines for instant beverages, but it can also be used in other fields, such as for example bars, hotels and restaurants.

In recent years apparatuses for making hot and cold instant beverages have become considerably widespread.

The companies that manufacture these machines have tried to gain greater footholds also in the market of beverages, for example coffee, by each providing their own capsule usable, due to its shape, uniquely by the specific machine for which was provided.

Such capsules have a tray-like body made of plastic or metallic material, which is generally frustum-like and closed in an upper region and in some cases also in a lower region by a single film or by a polylaminate made of plastic or metallic material with or without a barrier function and in some cases previously microperforated. This film can be pierced at the moment of the beverage dispensing (if the film is microperforated, this operation might not be performed). In other cases the upper part of the capsule can be closed by a rigid lid made of plastic material.

With the diffusion of compatible capsules, that are provided with the same shape as the originals but sold at more competitive prices, companies that manufacture the original machines and capsules have sought systems for detecting the originality of the capsule that were unrelated to shape.

A capsule detection system is based on a color reader, capable of detecting the particular waveform of a color of a portion of the upper film of the capsule. An example of such a capsule and system is disclosed in WO2014/001564 A1.

However, the color of the original capsule can be reproduced rather easily also on compatible capsules.

In order to overcome this drawback, some companies have started to produce capsules with two portions of the film that are characterized by different colors. In this case the machine must detect the combination of two colors by analyzing the two portions affected by the upper film.

The capsule detection system, both the one-color and two-color type, is complicated due to the presence of at least three elements: a proximity device, which detects the presence or not of a capsule in the dispensing compartment; a light emitter, for each colored portion, adapted to illuminate a colored portion of the film; and a sensor for detecting reflected light, for each colored portion of the film, capable of detecting color.

As an alternative to this capsule detection system there are sensors based on reading a code, for example a bar code. An identifying code of a particular type of original capsule is printed on the film or on the lateral wall of the tray and is read by a scanner when the capsule is inserted in the dispensing compartment.

Even this type of system, however, has drawbacks, since the code must be applied to the film or to the capsule, or printed on it, after its provision, generating further costs and production times.

Furthermore, the issues related to the protection and safeguard of the environment are felt increasingly by public opinion and governments.

In order to reduce the environmental impact of waste, they are in fact starting to impose increasingly restrictive regulations aimed at waste recycling, biodegradability and compostability.

For this reason, it is necessary to find an alternative to currently known capsules, made of non-recyclable materials, which are thus disposed of by storage in landfills among non-recyclable waste.

The aim of the present invention is to provide a capsule for soluble product, of the beverage type, that is capable of improving the prior art in one or more of the above mentioned aspects.

Within this aim, an object of the invention is to provide a capsule for soluble product, of the beverage type, that can be detected by a particular type of machine for which it is produced in a simple manner and with systems that are less complex than the ones commercially available.

Another object of the invention is to provide a capsule for soluble product, of the beverage type, that is detectable by a particular type of machine for which it is produced, that can be provided quickly and easily.

A further object of the present invention is to provide a beverage dispensing machine that is capable of detecting and using a capsule for soluble product, of the beverage type, according to the invention.

Another object of the invention is to provide a capsule for soluble product, of the beverage type, that can be disposed of among organic waste after use.

Another object of the present invention is to overcome the drawbacks of the prior art in a manner which is alternative to any existing solutions.

Another object of the invention is to provide a capsule for soluble product that is highly reliable, relatively easy to provide and at competitive costs.

This aim, as well as these and other objects which will become better apparent hereinafter, are achieved by a capsule for soluble and non-soluble product, such as coffee and its derivatives, tea and herbal teas, having a tray-like body made of plastic material and a film that closes the tray, characterized in that it comprises, embedded in said plastic material of the tray, a substance that can be detected by a sensor.

Further characteristics and advantages of the invention will become better apparent from the description of a preferred but not exclusive embodiment of the capsule for soluble product according to the invention, illustrated by way of non-limiting example in the accompanying drawings, wherein:

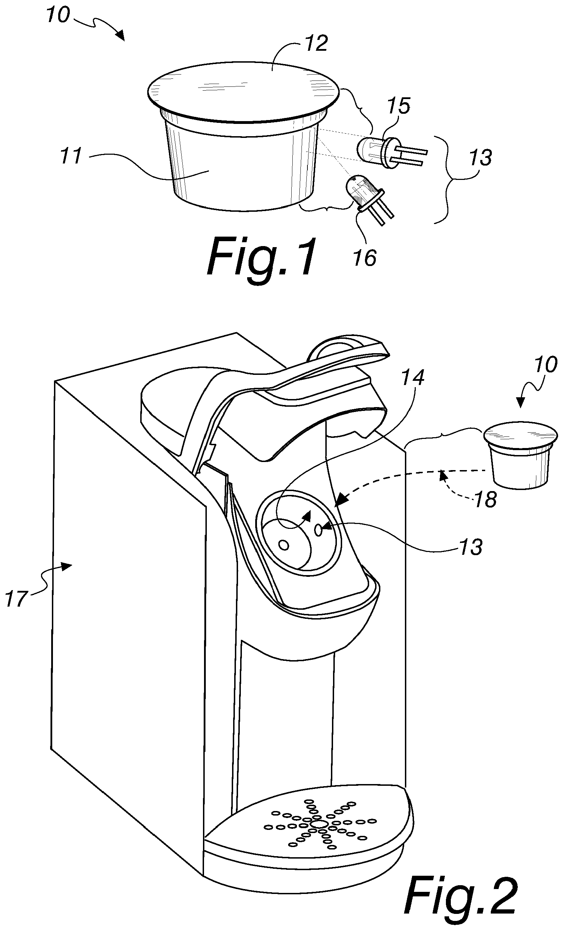

Figure 1 is a view of a capsule according to the invention in an active step of the dispensing machine;
Figure 2 is a view, merely by way of non-limiting example, of a dispensing machine for a capsule according to the invention.

With reference to the above figures, a capsule for soluble product according to the invention is generally designated by reference numeral 10.

The capsule 10 has a tray-like body 11 made of plastic or metallic material, which is generally frustum-shaped and is closed in an upper region and in some cases also in a downward region by a single or polylaminated film 12 made of plastic or metallic material with or without a barrier function and in some cases previously microperforated. This film 12 can be pierced at the time of beverage dispensing (if the film is microperforated, this operation might not be performed). In other cases the upper part of the capsule can be closed by a rigid lid made of plastic material.

The tray-like body 11 is made of plastic material, such as for example polypropylene.

In particular, the plastic material of which the film 12 and/or the lid of the tray-like body 11 are both made is at least biodegradable and preferably compostable.

The term "biodegradable" is understood to reference the capacity of a material to be degraded into simpler substances by means of the enzymatic activity of microorganisms.

The term "compostable" means what is defined by the EN 13432 standard of 2002, and in particular that a material must have the following characteristics:
- degrade by at least of 90% in six months if subjected to an environment rich in carbon dioxide, these values must be tested with the EN 14046 standard method;
- in contact with organic materials for a period of three months, the mass of the material must be constituted for at least 90% by fragments with dimensions smaller than 2 mm, such values must be tested with the EN 14045 standard method;

- the material must not have negative effects on the composting process;
- low concentration of heavy metals added to the material;
- values of pH within the limits set by the standard;
- salinity within the limits set by the standard;
- concentration of volatile solids within the limits set by the standard;
- concentration of nitrogen, phosphorus, magnesium and potassium within the limits set by the standard.

In particular, the compostability and/or biodegradability of the plastic material of which the film 12 and/or lid and the tray-like body 11 are made is detectable by means of a sensor.

A particularity of the invention resides in the composition of the tray 11 and in its production method.

The tray 11 made of plastic material is provided, for example, by means of thermoforming from a sheet under pressure or by injection in adapted molds. A substance that can be detected by a sensor is dispersed and/or embedded within said plastic material.

Said sensor is, for example, an infrared detection sensor.

The substance is, preferably, homogeneously distributed and its quantity is such to make it detectable by the sensor 13.

The raw material of said substance is, for example, a powder or a substance in liquid form, mixed in a matrix of the base material of the tray 11.

The detection technology is based, for example, on the infrared conversion of a signal deriving from a material with microscopic particles. Said particles are embedded in a matrix and are stimulated by an infrared radiation in order to be detected. The detector is specific for the detection of the electromagnetic absorption and/or reflection of said type of material.

One substance that can be used as tracer in said plastic material of the tray 11 is, for example, one of those of the series known by the trade name "Securalic Reveal" of the company Merck Performance Materials, or the like.

With reference to the figures, in order to dispense beverages the capsule is introduced in a machine 17, in the case of this example a coffee machine, in a capsule holding compartment 14 as indicated by the arrow 18.

The capsule holding compartment 14 has, on the inner lateral walls, a detection sensor 13, for example of the infrared type.

The sensor 13 comprises a signal emitter 15 and a signal receiver 16, which can also coincide and face the lateral wall of the tray 11 of the capsule 10.

Once the capsule 10 has been introduced in the compartment 14, the emitter 15 emits a particular radiation toward the tray 11, which reflects it at least partially. The reflection is read by the receiver 16, which is capable of reading a particular waveform associated with the composition of the original capsule.

If the capsule is original, the mentioned substance, dispersed and/or embedded in the plastic material of the tray 11, determines a specific reflection of the radiation. When the receiver 16 detects said specific reflection of the radiation, it generates a signal for starting the dispensing of the beverage.

In the case of an unauthorized capsule, the absence of said substance in the plastic material of the tray 11 entails a different or failed reflection of the radiation emitted by the emitter 15, with respect to the one generated by the original capsule, with subsequent blocking of dispensing.

The beverage dispensing system is per se known.

It should be noted that the presence of a substance detectable by a sensor in the plastic material of the tray determines an easier provision of the capsule, since such substance is dispersed in the base material of the tray, without complicating nor varying substantially the method for its provision.

It should also be noted that the presence of a substance detectable by a sensor in the plastic material of the tray allows to provide dispensing machines with capsule detection systems that are simpler than those currently known.

In practice it has been found that the invention achieves the intended aim and objects by providing a capsule for soluble and non-soluble product, such as coffee and its derivatives, tea and herbal teas, having a tray-like body made of plastic material and a film that closes the tray, characterized in that it comprises, embedded in said plastic material of the tray, a substance that can be detected by a sensor.

Where technical features mentioned in any claim are followed by reference signs, those reference signs have been included for the sole purpose of increasing the intelligibility of the claims and accordingly such reference signs do not have any limiting effect on the interpretation of each element identified by way of example by such reference signs.

## Claims

1. A capsule (10) for a soluble and non-soluble product, such as coffee and its derivatives, tea and herbal teas and beverages, provided with a tray-like body (11) made of plastic material and a film (12) that closes the tray (11), a substance that can be detected by a sensor (13), **characterized in that** said substance detectable by a sensor (13) is a powder and/or initially a substance in liquid form. embedded in said plastic material of the tray (11).

2. The capsule (10) according to claim 1, **characterized in that** said sensor (13) is of the infrared type.

3. The capsule (10) according to one or more of the preceding claims, **characterized in that** said film (12) is provided by means of a thin film of plastic and/or metallic material and/or by means of the superimposition of continuous microperforated and non-microperforated layers of plastic and metallic material.

4. The capsule (10) according to one or more of the preceding claims, **characterized in that** said tray (11) is closed in an upper region by a rigid lid made of plastic material.

5. The capsule (10) according to one or more of the preceding claims, **characterized in that** said plastic material of which said film (12) and/or said lid and said tray-like body (11) are made is an at least biodegradable and preferably compostable material.

6. The capsule (10) according to one or more of the preceding claims, **characterized in that** said tray (11) made of plastic material is provided by thermoforming from a sheet under pressure or by injection in adapted molds.

7. A dispensing machine (17) using a capsule (10) according to one or more of the preceding claims, comprising a capsule holding compartment (14), **characterized in that** it comprises a sensor (13) on the internal side walls of said compartment (14), which faces said tray (11), for detecting said substance.

8. The machine (17) according to claim 7, **characterized in that** said sensor (13) comprises a signal emitter (15) and a signal receiver (16).

9. The machine (17) according to claim 7 or 8, **characterized in that** said emitter (15) and said receiver (16) coincide.

10. The machine (17) according to one or more of the claims 7 to 9, **characterized in that** said sensor (13) is of the infrared type.

## Patentansprüche

1. Eine Kapsel (10) für ein lösliches und nicht lösliches Produkt, wie zum Beispiel Kaffee und seine Derivate, Tee und Kräutertees und Getränke, ausgestattet mit einem becherartigen Körper (11) aus Kunststoffmaterial und einer Folie (12), die den Becher verschließt (11) eine Substanz, die von einem Sensor (13) erfasst werden kann; **dadurch gekennzeichnet, dass** die von einem Sensor (13) erfassbare Substanz ein Pulver und/oder zunächst eine Substanz in flüssiger Form ist, eingebettet in das Kunststoffmaterial des Bechers (11).

2. Die Kapsel (10) gemäß Anspruch 1, **dadurch gekennzeichnet, dass** der Sensor (13) vom Infrarot-Typ ist.

3. Die Kapsel (10) gemäß einem oder mehreren der obigen Ansprüche, **dadurch gekennzeichnet, dass** die Folie (12) mit Hilfe eines dünnen Films aus Kunststoff- und/oder Metallmaterial und/oder durch das Übereinanderlegen durchgehender mikroperforierter und nicht mikroperforierter Schichten aus Kunststoff- und Metallmaterial hergestellt wird.

4. Die Kapsel (10) gemäß einem oder mehreren der obigen Ansprüche, **dadurch gekennzeichnet, dass** der Becher (11) in einem oberen Bereich durch einen starren Deckel aus Kunststoffmaterial verschlossen ist.

5. Die Kapsel (10) gemäß einem oder mehreren der obigen Ansprüche, **dadurch gekennzeichnet, dass** das Kunststoffmaterial, aus dem die Folie (12) und/oder der Deckel und der becherartige Körper (11) bestehen, ein zumindest biologisch abbaubares und vorzugsweise kompostierbares Material ist.

6. Die Kapsel (10) gemäß einem oder mehreren der obigen Ansprüche, **dadurch gekennzeichnet, dass** der Becher (11) aus Kunststoffmaterial durch Wärmeformen aus einem Blech unter Druck oder durch Einspritzen in geeignete Formen hergestellt wird.

7. Eine Spendermaschine (17), die eine Kapsel (10) gemäß einem oder mehreren der obigen Ansprüche verwendet und ein Kapsel-Aufnahmefach (14) umfasst, **dadurch gekennzeichnet, dass** es an den inneren Seitenwänden des Fachs (14) einen Sensor (13) umfasst, welcher dem Becher (11) zugewandt ist, um die Substanz zu erfassen.

8. Die Maschine (17) gemäß Anspruch 7, **dadurch gekennzeichnet, dass** der Sensor (13) einen Signalemitter (15) und einen Signalempfänger (16) umfasst.

9. Die Maschine (17) gemäß Anspruch 7 oder 8, **dadurch gekennzeichnet, dass** der Emitter (15) und der Empfänger (16) übereinstimmen.

10. Die Maschine (17) gemäß einem oder mehreren der Ansprüche 7 bis 9, **dadurch gekennzeichnet, dass** der Sensor (13) vom Infrarot-Typ ist.

## Revendications

1. Capsule (10) pour produit soluble et non soluble, comme le café et ses dérivés, le thé et les tisanes et les boissons, pourvue d'un corps en forme de cuvette (11) en matière plastique et d'un film (12) qui ferme la cuvette (11), une substance qui peut être détectée par un capteur (13), **caractérisée en ce que** ladite substance détectable par un capteur (13) est une poudre et/ou initialement une substance sous forme liquide incorporée dans ladite matière plastique de la cuvette (11).

2. Capsule (10) selon la revendication 1, **caractérisée en ce que** ledit capteur (13) est du type à infrarouge.

3. Capsule (10) selon l'une ou plusieurs des revendications précédentes, **caractérisée en ce que** ledit film (12) est constitué d'un mince film en plastique et/ou en matériau métallique et/ou par la superposition de couches de plastique et de matériau métallique continues microperforées et non microperforées.

4. Capsule (10) selon l'une ou plusieurs des revendications précédentes, **caractérisée en ce que** ladite cuvette (11) est fermée dans une région supérieure par un couvercle rigide en matière plastique.

5. Capsule (10) selon l'une ou plusieurs des revendications précédentes, **caractérisée en ce que** ladite matière plastique dont sont faits ledit film (12) et/ou ledit couvercle et ledit corps en forme de cuvette (11) est une matière au moins biodégradable et de préférence compostable.

6. Capsule (10) selon l'une ou plusieurs des revendications précédentes, **caractérisée en ce que** ladite cuvette (11) en matière plastique est réalisée par thermoformage à partir d'une feuille sous pression ou par injection dans des moules adaptés.

7. Machine de distribution (17) utilisant une capsule (10) selon l'une ou plusieurs des revendications précédentes, comprenant un compartiment récepteur de capsule (14), **caractérisée en ce qu'**elle comprend un capteur (13) sur les parois latérales intérieures dudit compartiment (14), qui se situe en face de ladite cuvette (11), pour détecter ladite substance.

8. Machine (17) selon la revendication 7, **caractérisée en ce que** ledit capteur (13) comprend un émetteur de signal (15) et un récepteur de signal (16).

9. Machine (17) selon la revendication 7 ou 8, **caractérisée en ce que** ledit émetteur (15) et ledit récepteur (16) coïncident.

10. Machine (17) selon l'une ou plusieurs des revendications 7 à 9, **caractérisée en ce que** ledit capteur (13) est du type à infrarouge.
